(19) Europäisches Patentamt
European Patent Office
Office européen des brevets

(11) EP 3 102 469 B1

(12) **FASCICULE DE BREVET EUROPEEN**

(45) Date de publication et mention
de la délivrance du brevet:
**23.10.2019 Bulletin 2019/43**

(51) Int Cl.:
**B60W 30/045** (2012.01)

(21) Numéro de dépôt: **15706880.0**

(22) Date de dépôt: **03.02.2015**

(86) Numéro de dépôt international:
**PCT/FR2015/050238**

(87) Numéro de publication internationale:
**WO 2015/114280 (06.08.2015 Gazette 2015/31)**

(54) **PROCEDE DE SUIVI DE TRAJECTOIRE D'UN VEHICULE AUTOMOBILE ET VEHICULE ASSOCIE**

VERFAHREN ZUR ÜBERWACHUNG DES WEGES EINES KRAFTFAHRZEUGS UND
ENTSPRECHENDES FAHRZEUG

METHOD FOR MONITORING THE TRAJECTORY OF A MOTOR VEHICLE AND ASSOCIATED
VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.02.2014 FR 1400290**

(43) Date de publication de la demande:
**14.12.2016 Bulletin 2016/50**

(73) Titulaire: **Renault S.A.S.**
**92100 Boulogne-Billancourt (FR)**

(72) Inventeurs:
• **AMARA, Sofiane**
**F-75013 Paris (FR)**
• **ARNOUX, Emmanuel**
**F-78200 Mantes La Jolie (FR)**

(56) Documents cités:
**EP-A1- 2 008 900**     **EP-A1- 2 374 673**
**EP-A2- 1 916 142**     **DE-A1-102006 026 188**
**DE-A1-102012 206 010**    **US-A1- 2002 198 646**
**US-A1- 2009 127 014**

**Description**

L'invention a pour objet les systèmes de suivi de trajectoire de véhicule automobile. Des systèmes de détection d'écart de trajectoire sont connus pour des véhicules automobiles de type traction, dans lesquels les roues arrière sont non motrices. Les vitesses de rotation de ces roues arrière non motrices peuvent être prises comme références afin de juger de la « normalité » des vitesses de rotation des roues avant, et détecter un éventuel glissement des roues avant.

Un tel système de suivi de trajectoire est ainsi décrit dans la demande de brevet FR 2 955 943, qui propose de comparer l'écart de vitesse entre les roues avant et l'écart de vitesse entre les roues arrière du véhicule, et qui propose de mettre en place une stratégie de contrôle de trajectoire spécifique si la différence entre ces deux écarts devient supérieure à un seuil.

US 2009/0127014 décrit un procédé de suivi de trajectoire dans lequel un écart de trajectoire théorique est déterminé.

L'invention a pour but de proposer un système de suivi de trajectoire qui peut être appliqué à des véhicules de type propulsion et/ou à des véhicules à quatre roues motrices.

A cette fin l'invention propose un procédé de suivi de trajectoire d'un véhicule automobile, dans lequel on calcule, en fonction d'un angle au volant du véhicule et en fonction de la vitesse d'une roue motrice, ladite roue faisant partie d'un premier essieu du véhicule et étant une roue extérieure à la courbe actuelle de la trajectoire du véhicule, un écart de vitesse théorique entre les roues du premier essieu, dans lequel on détermine un premier écart de vitesse mesuré par différence entre deux vitesses mesurées de deux roues du premier essieu, et dans lequel, si la valeur absolue de la différence entre le premier écart mesuré et l'écart théorique est supérieure à un seuil, on modifie une consigne de répartition de couple entre les deux roues du premier essieu.

Les vitesses de roues prises en compte peuvent être des vitesses de rotation angulaires ou peuvent être des vitesses d'avance linéaire des roues du véhicule. Le premier essieu est de préférence un essieu arrière du véhicule, mais pourrait être un essieu avant du véhicule pour certaines variantes de réalisation, par exemple un véhicule avec une motorisation de type traction. On détecte quelles sont les roues extérieures à la trajectoire du véhicule par exemple en fonction de l'angle au volant du véhicule. Pour répondre à la consigne de répartition de couple, la répartition de couple entre deux roues d'un essieu peut être modifiée en appliquant un couple de freinage dissipatif supplémentaire à l'une des deux roues de l'essieu, ce couple venant s'ajouter algébriquement soit à un couple de freinage déjà appliqué aux deux roues de l'essieu, soit au couple moteur appliqué aux deux roues de l'essieu. Ainsi la répartition du couple moteur total (couple appliqué à partir du moteur et couple de freinage) appliqué aux deux roues de l'essieu est modifiée. On peut envisager des variantes de réalisation où les couples moteur appliqués aux deux roues de l'essieu peuvent être pilotés indépendamment l'un de l'autre, par exemple si les roues sont mues chacune par un moteur indépendant ou si les roues reçoivent chacune un couple moteur au travers d'un différentiel piloté, permettant à l'aide d'un système d'embrayage de distribuer de manière variable le couple issu d'un moteur du véhicule en proportions variables entre les deux roues d'un même essieu. Si les couples moteurs appliqués aux deux roues de l'essieu peuvent être pilotés indépendamment l'un de l'autre, alors la modification de la consigne de répartition de couple entre les deux roues de l'essieu peut se répercuter directement sur la répartition du couple moteur sans faire nécessairement intervenir de couple de freinage.

La modification de la consigne de répartition de couple entre les deux roues de l'essieu correspond à un changement de stratégie de correction de trajectoire du véhicule. En d'autres termes, on déclenche deux stratégies différentes de contrôle de trajectoire selon que la valeur absolue de la différence entre le premier écart mesuré et l'écart théorique est supérieure à un seuil ou que la valeur absolue de la différence entre le premier écart mesuré et l'écart théorique est inférieure au seuil.

L'écart théorique est calculé en multipliant par l'angle au volant du véhicule, la vitesse de la roue du premier essieu qui est à ce moment extérieure à la trajectoire, et en divisant le résultat par une fonction linéaire de l'angle au volant du véhicule.

De préférence, on n'utilise l'écart théorique de vitesse que si l'angle au volant est supérieur à un seuil. On évite ainsi de déclencher une stratégie de correction de trajectoire basée sur des erreurs de mesures de l'angle au volant pour des valeurs de l'angle au volant proche de zéro. On évite également des instabilités du système lié à une alternance trop rapide de sélection de roue arrière droite et de roue arrière gauche comme roue de référence extérieure à la courbe de la trajectoire.

Selon un premier mode de mise en oeuvre, on ne compare à l'écart théorique, que le premier écart de vitesse, mesuré entre les deux roues du premier essieu. Ce premier mode peut notamment être appliqué à un véhicule à propulsion à deux roues motrices, en définissant l'essieu arrière comme premier essieu.

Selon un second mode de réalisation on compare en outre au même écart théorique, un second écart mesuré entre les vitesses de deux roues d'un second essieu du véhicule différent du premier essieu, et si la valeur absolue de la différence entre le second écart mesuré et l'écart théorique est supérieure à un seuil, on modifie une consigne de répartition de couple entre les deux roues du second essieu. Ce premier mode peut notamment être appliqué à un véhicule à quatre roues motrices, en définissant l'essieu arrière comme premier essieu.

On suppose dans le premier mode comme dans le second mode que les roues directrices du véhicule sont les roues avant du véhicule.

Selon un autre aspect, l'invention propose un véhicule automobile équipé d'une unité de suivi de trajectoire recevant au moins deux vitesses mesurées de deux roues d'un même premier essieu du véhicule et recevant les valeurs d'angle au volant du véhicule, dans lequel l'unité de suivi de trajectoire est configurée pour élaborer, en utilisant comme seules valeurs variables les deux vitesses mesurées et l'angle au volant, une première variable booléenne utilisée pour sélectionner une stratégie de correction de trajectoire parmi plusieurs stratégies. On considère qu'une variable est une variable booléenne si elle peut rendre au moins deux valeurs distinctes et si chacune de ces valeurs distinctes déclenche une stratégie de correction de trajectoire différente. Une stratégie de correction de trajectoire peut consister à modifier par exemple une consigne de répartition de couple entre les deux roues du premier essieu. Par exemple, le véhicule peut comprendre une unité de correction de trajectoire, qui est configurée pour appliquer une première stratégie si la variable booléenne est positive, et qui est configurée pour appliquer une stratégie différente si la variable booléenne est négative.

Un résultat de test sur des valeurs calculées à partir des deux vitesses mesurées des deux roues et de l'angle au volant du véhicule peut directement conditionner le choix entre deux stratégies de correction de trajectoire. On considère alors qu'une variable booléenne a été calculée même si aucun nom de variable ne lui a été affecté.

L'unité de suivi de trajectoire peut être en outre configurée pour élaborer, en utilisant comme seules valeurs variables quatre vitesses de quatre roues du véhicule et l'angle au volant, une seconde variable booléenne distincte de la première, cette variable booléenne étant elle aussi utilisée pour sélectionner une stratégie de correction de trajectoire parmi plusieurs stratégies.

Une variable booléenne sert à déclencher ou à ne pas déclencher une stratégie donnée de correction de trajectoire. Des stratégies de correction de trajectoire sont connues. Une stratégie différente peut être appliquée, dans le cas du véhicule à 4 roues motrices, suivant que la première, la seconde, les deux variables booléennes sont activées, ou selon qu'aucune n'est activée.

Selon un mode de réalisation préféré, l'unité de suivi est configurée pour calculer à partir de la vitesse d'une roue, ladite roue faisant partie d'un premier essieu du véhicule et étant une roue extérieure à la courbe actuelle de la trajectoire du véhicule, et en fonction d'un angle au volant du véhicule, un écart de vitesse théorique entre les roues du premier essieu, et est configurée pour comparer cet écart de vitesse théorique à un premier écart de vitesse mesuré entre les deux roues du premier essieu.

Selon encore un autre mode de réalisation, l'unité de suivi est en outre configurée pour comparer l'écart de vitesse théorique à un second écart de vitesse mesuré entre deux roues d'un second essieu du véhicule.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue schématique d'un véhicule équipé d'un système de suivi de trajectoire selon l'invention,
- la figure 2 est un algorithme simplifié d'une partie de schéma de fonctionnement d'un véhicule selon l'invention,
- la figure 3 est un algorithme simplifié d'une partie de schéma de fonctionnement d'un autre véhicule selon l'invention,
- la figure 4 illustre de manière schématique quelques grandeurs géométriques prises en compte lors de l'implémentation d'un système de suivi de trajectoire selon l'invention.

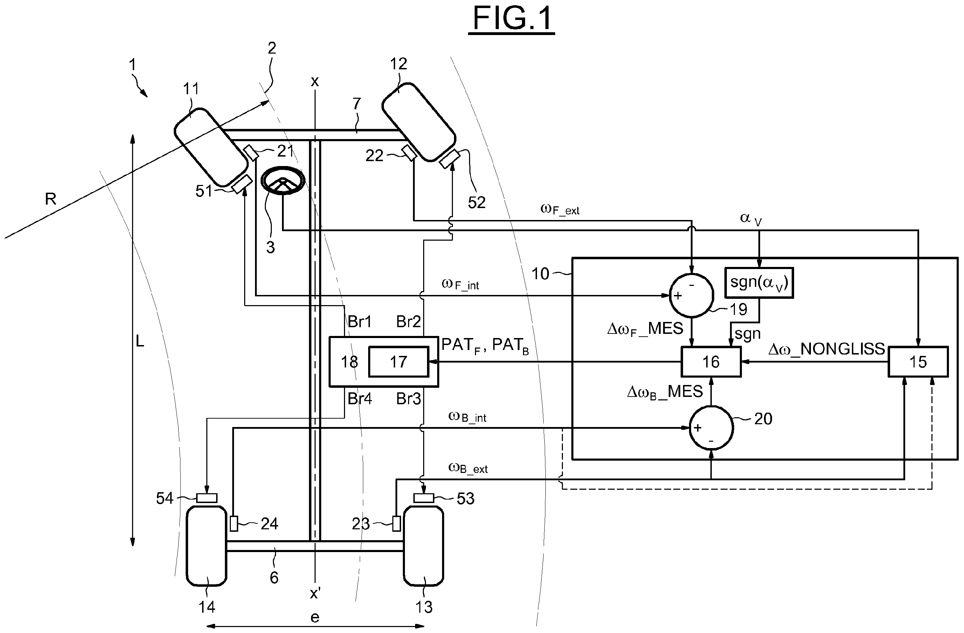

Tel qu'illustré sur la figure 1, un véhicule 1 équipé d'un système de suivi de trajectoire selon l'invention comprend quatre roues, soit deux roues arrière 13 et 14 d'un premier essieu 6 et deux roues avant 11 et 12 d'un second essieu 7. Le véhicule suit une trajectoire 2 qui suit à l'instant représenté une courbe moyenne de rayon R. Le véhicule 1 présente un axe central longitudinal xx'. Le véhicule 1 comprend une unité de commande électronique 10 qui reçoit d'un volant 3 du véhicule, une valeur d'angle au volant $\alpha_V$.

Le véhicule 1 comprend quatre freins 51, 52, 53, 54 associés respectivement aux roues 11 12, 13, 14. Ces freins 51, 52, 53, 54 sont commandés par une unité de freinage 18 à laquelle est intégrée une unité de correction de trajectoire 17. L'unité de freinage 18 transmet respectivement des consignes Br1, Br2, Br3, Br4 de couple de freinage à chacun des freins 51, 52, 53, 54. L'unité de freinage 18 élabore les consignes de couple de freinage Br1, Br2, Br3, Br4 en fonction notamment du signal d'une pédale de freinage (non représentée) et de différents signaux venant d'autres unités de commande électronique telles que par exemple l'unité de commande électronique 10, et qui sont analysés au niveau de l'unité de correction de trajectoire 17 pour imposer au besoin une différence de couple de freinage entre les deux roues arrière du véhicule et/ou pour imposer une différence de couple de freinage entre les deux roues avant du véhicule si ces roues sont également des roues motrices du véhicule.

Chacune des roues 11, 12, 13, 14 est équipée respectivement d'un capteur de vitesse de rotation de la roue 21, 22, 23, 24.

Chacun des capteurs de vitesse de roue 21, 22, 23, 24 transmet une vitesse de rotation notée $\omega_{F\_int}$, $\omega_{F\_ext}$

pour les roues avant et notées $\omega_{B\_int}$, $\omega_{B\_ext}$ pour les roues arrière, à une unité de commande électronique 10. On considère sur la figure 1 que l'unité de commande électronique 10, en fonction de l'angle au volant $\alpha_V$, a détecté quelle est la roue avant extérieure et quelle est la roue avant intérieure à la courbe de la trajectoire 2. La vitesse de la roue avant intérieure à la courbe est notée $\omega_{F\_int}$, et la vitesse de la roue avant extérieure à la courbe est notée $\omega_{F\_ext}$. De même, la vitesse de la roue arrière intérieure à la courbe est notée $\omega_{B\_int}$, et la vitesse de la roue arrière extérieure à la courbe est notée $\omega_{B\_ext}$.

L'unité de commande électronique 10 comprend une unité de calcul 15, qui estime une valeur d'écart de référence ou écart théorique $\Delta\omega\_NONGLISS$, qui est calculée par l'unité de calcul 15 à partir de la vitesse de rotation $\omega_{B\_ext}$ qui est la vitesse de rotation de la roue arrière extérieure au virage, et en fonction de l'angle $\alpha_V$ au volant. L'écart théorique $\Delta\omega\_NONGLISS$ représente une différence théorique de vitesse que l'on doit théoriquement avoir entre roues extérieures au virage et roues intérieures au virage si aucune des roues ne glisse par rapport au sol. En effet, on calcule à partir de la vitesse de la roue arrière (roue non directrice) qui se trouve à ce moment être la roue extérieure au virage, un écart de vitesse théorique qui correspond à l'écart de vitesse que l'on devrait mesurer entre roue extérieure arrière et roue intérieure arrière si aucun glissement des roues ne se produit par rapport au sol. Cet écart de vitesse théorique correspond également à l'écart de vitesse que l'on devrait mesurer entre roue extérieure avant et roue intérieure avant si aucun glissement des roues ne se produit par rapport au sol.

L'unité de commande électronique 10 comprend un comparateur 16 qui reçoit sur une de ses entrées, à partir d'un soustracteur 20, un écart entre vitesses de rotation mesurées $\omega_{B\_int}$, $\omega_{B\_ext}$ des roues arrière 13 et 14, qui reçoit de l'unité de calcul 15, sur une seconde entrée, l'écart théorique $\Delta\omega\_NONGLISS$, et qui reçoit éventuellement une valeur sgn correspondant au signe de l'angle au volant $\alpha_V$. Selon une variante de réalisation, le signe de l'angle au volant $\alpha_V$ peut servir à multiplier l'écart entre vitesses de rotation des roues arrière délivré par le soustracteur 20 avant que cet écart ne soit envoyé au comparateur 16.

Le comparateur 16 estime la différence entre l'écart de vitesse théorique $\Delta\omega\_NONGLISS$, et entre l'écart entre les vitesses mesurées des deux roues arrière du véhicule. En fonction de la valeur absolue du résultat, le comparateur 16 envoie une variable booléenne $PAT_B$ à l'unité de correction de trajectoire 17 qui utilise cette variable pour sélectionner une stratégie de correction de trajectoire particulière. Selon une variante de réalisation, si le véhicule 1 est un véhicule à quatre roues motrices, le comparateur 16 peut également recevoir sur une troisième entrée, à partir d'un soustracteur 19, une différence entre les vitesses mesurées de rotation des deux roues avant du véhicule. Cette différence peut être éventuellement multipliée par le signe de l'angle au volant $\alpha_V$. Le comparateur 16 estime alors également une différence entre l'écart de vitesse théorique $\Delta\omega\_NONGLISS$, calculé à partir de la vitesse de la roue arrière extérieure, et entre l'écart entre les vitesses mesurées des deux roues avant du véhicule. En fonction de la valeur absolue du résultat, le comparateur 16 envoie une variable booléenne $PAT_F$ à l'unité de correction de trajectoire 17 qui utilise les variables $PAT_F$ et $PAT_B$ pour mettre en place une stratégie de correction de trajectoire adaptée.

Ainsi le comparateur 16 de l'unité de commande électronique 10 transmet à l'unité de correction de trajectoire 17 de l'unité de freinage 18, une ou plusieurs variables booléennes notées ici $PAT_F$, $PAT_B$ et qui indiquent si une anomalie a été détectée respectivement sur les vitesses de rotation des roues arrière du véhicule, ou sur les vitesses de rotation des roues avant du véhicule. Une variable $PAT_F$, $PAT_B$ négative peut par exemple ne pas déclencher de différence de couple de freinage entre les deux roues du train de roues avant, respectivement entre les deux roues du train arrière. Une variable $PAT_F$, $PAT_B$ positive peut déclencher au niveau de l'unité de correction de trajectoire 17 la délivrance de consignes de couples de freinage avec un incrément de couple non nul pour la roue extérieure à la courbe par rapport à la roue intérieure à la courbe. L'unité de correction de trajectoire 17 peut utiliser la valeur de l'angle au volant $\alpha_V$ ou du moins le signe de $\alpha_V$ pour calculer l'incrément de couple correspondant.

Concernant les caractéristiques géométriques du véhicule illustré en figure 1, l'écart entre une roue droite et une roue gauche du véhicule, c'est-à-dire l'écart entre un plan médian de la roue droite et un plan médian de la roue gauche est noté " e ". Toujours sur la figure 1, l'écart entre les axes des roues avant et les axes des roues arrière ou empattement du véhicule, est noté "L".

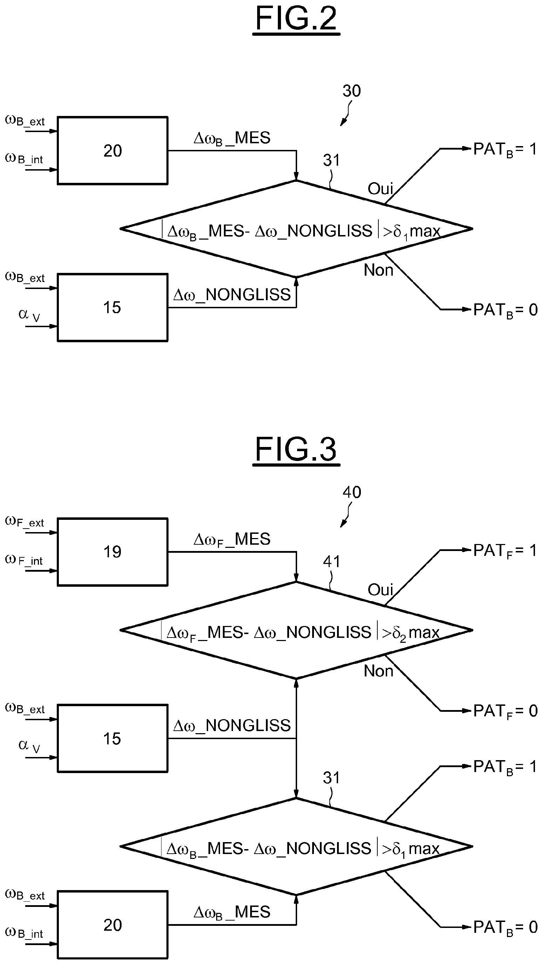

La figure 2 illustre un algorithme 30 présentant de manière simplifiée un mode de fonctionnement de l'invention pour un véhicule avec une motorisation de type "propulsion" à deux roues motrices. On retrouve sur la figure 2 des éléments communs à la figure 1, les mêmes éléments étant désignés par les mêmes références. L'unité de calcul 15 effectue un test sur le signe de l'angle au volant $\alpha_V$, et calcule ensuite, en fonction de la valeur de l'angle $\alpha_V$ et en fonction de la vitesse de rotation de la roue arrière qui a été détectée comme étant la roue extérieure au virage, une valeur d'écart de vitesse de rotation $\Delta\omega\_NONGLISS$ dont le calcul est explicité plus loin. Le soustracteur 20 calcule une différence mesurée de vitesses entre les deux roues arrière du véhicule, cette différence de vitesse étant affectée d'un signe qui est fonction du signe de l'angle au volant $\alpha_V$ de manière à obtenir un écart mesuré de vitesse $\Delta\omega\_MES$. Le comparateur 16 effectue ensuite à une étape 31 le calcul d'une différence entre l'écart de vitesse mesuré $\Delta\omega\_MES$ et l'écart de vitesse théorique $\Delta\omega\_NONGLISS$. Il prend la valeur absolue de cette différence et regarde si cette valeur absolue est supérieure à un seuil $\delta_{1max}$.

Si c'est le cas, il fait basculer à 1 une variable booléenne désignée ici par $PAT_B$, et dans le cas contraire maintient et fait basculer la variable booléenne PAT$_B$ à zéro. Cette variable booléenne est ensuite envoyée à une unité de correction de trajectoire 17 de la figure 1, qui prend en compte cette variable booléenne pour élaborer les consignes de couple de freinage des freins 53 et 54 des roues arrière du véhicule. Typiquement, dans l'exemple illustré en figure 2, si la valeur booléenne PAT$_B$ est positive, alors un couple de freinage différent sera appliqué aux deux roues arrière du véhicule. Si la valeur booléenne PAT$_B$ est négative, alors un même couple de freinage (ou un couple de freinage nul) sera appliqué aux deux roues arrière du véhicule. Dans cette variante de réalisation, on ne compare pas de différence mesurée de vitesses des roues avant avec l'écart de vitesses théoriques.

La figure 3 illustre un algorithme 40 présentant de manière simplifiée un mode de fonctionnement de l'invention pour un véhicule 1 à quatre roues motrices. On retrouve sur la figure 3 des éléments communs aux figures 1 et 2, les mêmes éléments étant désignés par les mêmes références. Comme dans l'algorithme 30, l'unité de calcul 15 utilise les vitesses des roues arrière pour déterminer une valeur d'écart théorique de vitesse $\Delta\omega$ NONGLISS à partir de l'angle au volant $\alpha_V$ et de la vitesse, parmi les deux vitesses de roues arrière qui est détectée comme étant la vitesse de la roue extérieure au virage $\omega_{B\_ext}$.

Comme sur la figure 2, le soustracteur 20 calcule une différence mesurée de vitesses entre les deux roues arrière du véhicule, cette différence de vitesse étant affectée d'un signe qui est fonction du signe de l'angle au volant $\alpha_V$ de manière à obtenir un écart mesuré de vitesse $\Delta\omega_{B\_MES}$.

Le soustracteur 19 calcule une différence mesurée de vitesse entre les deux roues avant du véhicule, cette différence de vitesse étant affectée d'un signe qui est fonction du signe de l'angle au volant $\alpha_V$ de manière à obtenir un écart mesuré de vitesse $\Delta\omega_{F\_MES}$. Le comparateur 16 effectue alors deux tests 31 et 41 calculant respectivement la valeur absolue des différences entre l'écart de vitesse théorique $\Delta\omega$ NONGLISS et chacune des deux différences de vitesse mesurées, au niveau des roues arrière pour le test 31 et au niveau des roues avant pour le test 41.

On note que l'écart de vitesse théorique pris comme référence dans les deux tests est le même et est celui des roues arrière non directrices du véhicule.

En fonction des résultats des tests 31 et 41, le comparateur 16 envoie vers l'unité 17 de correction de trajectoire deux variables booléennes PAT$_B$ et PAT$_F$. Chacune des variables booléenne PAT$_B$ et PAT$_F$ si elle est positive, déclenche respectivement l'application d'un couple différentiel de freinage sur les roues arrière et l'application d'un couple différentiel de freinage sur les roues avant du véhicule.

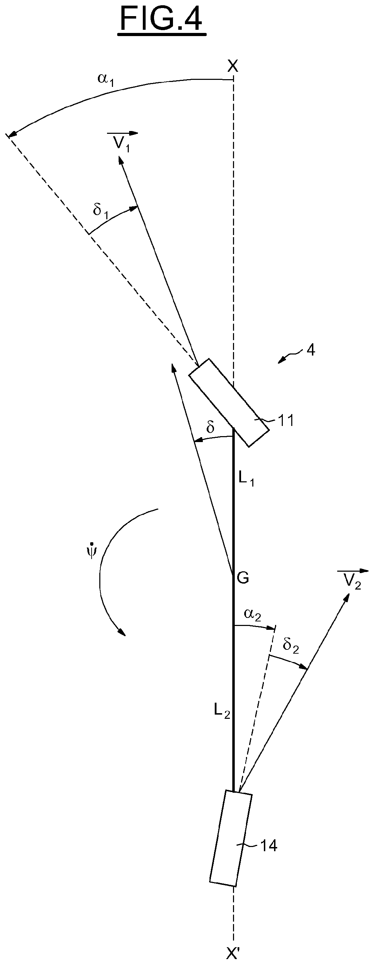

Pour calculer l'écart théorique de vitesse théorique on suppose que le véhicule 1 et sa trajectoire vérifient un certain nombre d'hypothèses. Certaines grandeurs prises en compte à cet effet sont représentées sur la figure 4, qui représente un modèle simplifié de véhicule 4, dont la largeur "e" entre roues a été ramenée à zéro. Ce véhicule simplifié 4 se déplace sur une roue avant 11 et une roue arrière 14. Les angles de braquage des roues 11 et 14 par rapport à un axe longitudinal XX' du véhicule soit $\alpha_1$ et $\alpha_2$, sont les mêmes que les angles des roues 11 et 14 du véhicule 1 de la figure 1 par rapport à un axe longitudinal xx' du véhicule 1.

Concernant le véhicule 1 de la figure 1, on considère que la vitesse de la roue arrière extérieure est une vitesse fiable, cette roue étant en « appui », la vitesse mesurée est représentative de l'évolution de la vitesse véhicule. Autrement dit lorsqu'on a détecté que le véhicule est en virage et que la roue considérée est la roue arrière extérieure (gauche ou droite), la valeur mesurée de vitesse angulaire de cette roue peut être utilisée telle quelle pour estimer les vitesses "idéales" de rotation des autres roues.

On considère que l'angle aide braquage aux roues avant, ou angle des roues par rapport à l'axe longitudinal du véhicule, est petit (cf figure 4 pour la définition de ce paramètre).

On considère que l'angle de braquage aux roues arrière $\alpha_2$ est nul car les roues arrières ne sont pas directrices, (cf figure 4 pour la définition de ce paramètre).

On considère que les angles de dérive $\delta1$, $\delta2$, $\delta$ sont petits, $\delta_1$ étant l'angle de glissement de la roue avant par rapport à la direction de vitesse $V_1$ de la roue avant, $\delta_2$ étant l'angle de glissement de la roue arrière par rapport à la direction de vitesse $V_2$ de la roue arrière et, $\delta$ étant l'angle de la vitesse du centre de gravité G du véhicule par rapport à l'axe longitudinal XX' du véhicule.

En prenant comme modèle le véhicule simplifié 4, on peut calculer le lien entre le rayon R de la trajectoire du véhicule et l'angle $\alpha_1$ de braquage avant :

$$tg(\alpha_1) = \alpha_1 = \frac{L}{R} \qquad \text{(Eq 1)}$$

L étant l'empattement = distance entre train avant et train arrière.

En revenant vers un schéma de véhicule à quatre roues distinctes, une représentation cinématique de la trajectoire des roues arrière permet d'écrire :

$$R_{ext} = R + e/2 \qquad (Eq\ 2)$$

$$R_{int} = R - e/2 \qquad (Eq\ 3)$$

$R_{ext}$ étant le rayon de la trajectoire de la roue extérieure et $R_{int}$ étant le rayon de la trajectoire de la roue intérieure, e étant la distance entre roues extérieures et roues intérieures.

Les distances parcourues $d_{ext}$ et $d_{int}$, respectivement distances parcourues par les roues extérieures et intérieures pendant un intervalle de temps $\Delta t$, peuvent être exprimées par :

$$\frac{d_{ext}}{R_{ext}} = \frac{d_{int}}{R_{int}}$$

d'où en dérivant par rapport au temps,

$$\frac{V_{ext}}{R_{ext}} = \frac{V_{int}}{R_{int}} \qquad (Eq\ 4)$$

$V_{ext}$ et $V_{int}$ étant respectivement les vitesses linéaires de la roue extérieure et de la roue intérieure.

On peut donc exprimer la différence de vitesses en fonction uniquement de la vitesse de la roue extérieure :

$$\Leftrightarrow V_{ext} - V_{int} = V_{ext} - \frac{R_{int}}{R_{ext}} \times V_{ext}$$

Les équations (2), (3) et (4) donnent :

$$V_{ext} - V_{int} = V_{ext} \times (1 - \frac{R - \frac{e}{2}}{R + \frac{e}{2}}) \qquad (Eq\ 5)$$

On peut exprimer l'équation (1) en fonction de l'angle au volant $\alpha_\gamma$ et de la démultiplication n de la direction).

$$\Leftrightarrow R = \frac{n \times L}{\alpha_v} \qquad (Eq\ 6)$$

En combinant les équations 5 et 6 on obtient :

$$\Delta\omega \_ NONGLISS = (V_{ext} - V_{int})_{théorique} = V_{ext} \times \frac{2e\alpha_v}{2nL + e\alpha_v}$$

On a donc une expression de l'écart $\Delta\omega$ NONGLISS des vitesses des roues arrière en fonction de la vitesse de la roue arrière extérieure et de l'angle au volant du véhicule. On n'utilise pas la vitesse de la roue arrière intérieure.

Selon les variantes de réalisation, on peut diviser l'équation ci-dessus par le rayon de la roue pour utiliser directement des valeurs de vitesses angulaires de roues.

L'invention ne se limite pas aux exemples de réalisation décrits et peut se décliner en de nombreuses variantes. Les vitesses de roues prises en compte peuvent être des vitesses de rotation ou peuvent être des vitesses linéaires de déplacement des roues tenant compte des rayons de chaque roue. Dans le cas où les vitesses de rotation prises en compte sont des vitesses de rotation angulaire, la prise en compte des variables booléennes $PAT_F$, $PAT_B$ peut être désactivée si l'on détecte qu'un des rayons d'une des roues est différent des rayons des autres roues, par exemple si on détecte qu'une roue de secours a été mise en place sur le véhicule ou si on détecte qu'une des roues est dégonflée.

Le procédé de correction de trajectoire selon l'invention peut être implémenté sur des véhicules existants en utilisant des capteurs déjà en place, et en ajoutant des unités de calcul des variables booléennes $PAT_F$, $PAT_B$. L'unité de correction de trajectoire 17, qui calcule le différentiel de couple à appliquer entre les deux paires de roues motrices du véhicule, peut être déjà présente ou peut être implémentée en utilisant des procédures de calcul connues.

L'invention permet, pour un coût très réduit, d'améliorer le comportement de suivi de trajectoire et donc la sécurité du véhicule et de ses occupants.

## Revendications

1. Procédé de suivi de trajectoire d'un véhicule automobile (1), dans lequel on calcule, en fonction d'un angle ($\alpha_v$) au volant du véhicule et en fonction de la vitesse ($\omega_{B\_ext}$) d'une roue motrice (13, 14), ladite roue faisant partie d'un premier essieu (6) du véhicule et étant une roue extérieure à la courbe actuelle de la trajectoire (2) du véhicule (1), un écart de vitesse théorique ($\Delta\omega\_NONGLISS$) entre les roues (13, 14) du premier essieu (6), dans lequel on détermine un premier écart de vitesse ($\Delta\omega_B\_MES$) mesuré par la différence entre deux vitesses mesurées de deux roues (13, 14) du premier essieu (6), et dans lequel, si la valeur absolue de la différence entre le premier écart mesuré ($\Delta\omega_B\_MES$) et l'écart théorique ($\Delta\omega\_NONGLISS$) est supérieure à un seuil ($\delta_1max$), on modifie une consigne de répartition de couple (Br3, Br4) entre les deux roues du premier essieu, **caractérisé en ce que** l'écart théorique ($\Delta\omega\_NONGLISS$) est calculé en multipliant par l'angle au volant ($\alpha_v$) du véhicule, la vitesse ($\omega_{B\_ext}$) de la roue du premier essieu (6) qui est à ce moment extérieure à la trajectoire (2), et en divisant le résultat par une fonction linéaire de l'angle au volant ($\alpha_v$) du véhicule.

2. Procédé de suivi de trajectoire selon la revendication 1, dans lequel on n'utilise l'écart théorique de vitesse ($\Delta\omega\_NONGLISS$) que si l'angle au volant ($\alpha_v$) est supérieur en valeur absolue à un seuil.

3. Procédé de suivi de trajectoire selon l'une quelconque des revendications précédentes, dans lequel on ne compare à l'écart théorique ($\Delta\omega\_NONGLISS$), que le premier écart de vitesse ($\Delta\omega_B\_MES$), mesuré entre les deux roues (13, 14) du premier essieu (6).

4. Procédé de suivi de trajectoire selon l'une quelconque des revendications 1 à 2, dans lequel on compare en outre au même écart théorique ($\Delta\omega\_NONGLISS$), un second écart ($\Delta\omega_F\_MES$) mesuré entre les vitesses de deux roues (11, 12) d'un second essieu (7) du véhicule différent du premier essieu (6), et si la valeur absolue de la différence entre le second écart mesuré et l'écart théorique est supérieure à un seuil ($\delta_2max$), on modifie une consigne de répartition de couple (Br1, Br2) entre les deux roues (11, 12) du second essieu (7).

5. Procédé de suivi de trajectoire selon la revendication 3, appliqué à un véhicule (1) à propulsion à deux roues motrices, et dans lequel on définit l'essieu arrière comme premier essieu (6).

6. Procédé de suivi de trajectoire selon la revendication 4, appliqué à un véhicule (1) à quatre roues motrices, et dans lequel on définit l'essieu arrière comme premier essieu (6).

7. Véhicule automobile équipé d'une unité de suivi de trajectoire (10) recevant au moins deux vitesses mesurées ($\omega_{B\_ext}$, $\omega_{B\_int}$) de deux roues motrices (13, 14) d'un même premier essieu (6) du véhicule (1), ladite unité de suivi comprenant un comparateur (16) apte à recevoir un écart entre lesdites vitesses de rotation mesurées ($\omega_{B\_int}$, $\omega_{B\_ext}$) desdites roues, et ladite unité de suivi recevant une valeur d'angle au volant ($\alpha_v$) du véhicule, **caractérisé en ce que** l'unité de suivi (10) est configurée pour modifier une consigne de répartition de couple (Br3, Br4) entre les deux roues lorsque la valeur absolue de la différence entre ledit écart entre lesdites vitesses de rotation mesurées ($\Delta\omega_B\_MES$) et un écart théorique ($\Delta\omega\_NONGLISS$) est supérieur à un seuil ($\delta_1max$), ledit écart théorique étant calculé en multipliant par l'angle au volant ($\alpha_v$) du véhicule, la vitesse ($\omega_{B\_ext}$) de la roue de l'essieu arrière (6) qui est à ce moment extérieure à la trajectoire (2), et en divisant le résultat par une fonction linéaire de l'angle au volant ($\alpha_v$) du véhicule.

**Patentansprüche**

1. Verfahren zur Fahrspurverfolgung eines Kraftfahrzeugs (1), wobei abhängig von einem Winkel ($\alpha_v$) am Lenkrad des Fahrzeugs und abhängig von der Geschwindigkeit ($\omega_{B\_ext}$) eines Antriebsrads (13, 14), wobei das Rad Teil einer ersten Achse (6) des Fahrzeugs und ein Rad außerhalb der aktuellen Kurve der Fahrspur (2) des Fahrzeugs (1) ist, eine theoretische Geschwindigkeitsabweichung ($\Delta\omega\_NONGLISS$) zwischen den Rädern (13, 14) der ersten Achse (6) berechnet wird, wobei eine erste Geschwindigkeitsabweichung ($\Delta\omega_B\_MES$) gemessen durch die Differenz zwischen zwei gemessenen Geschwindigkeiten von zwei Rädern (13, 14) der ersten Achse (6) bestimmt wird, und wobei, wenn der Absolutwert der Differenz zwischen der ersten gemessenen Abweichung ($\Delta\omega_B\_MES$) und der theoretischen Abweichung ($\Delta\omega\_NONGLISS$) höher ist als eine Schwelle ($\delta_1$max), ein Drehmoment-Verteilungssollwert (Br3, Br4) zwischen den zwei Rädern der ersten Achse verändert wird, **dadurch gekennzeichnet, dass** die theoretische Abweichung ($\Delta\omega\_NONGLISS$) durch Multiplizieren der Geschwindigkeit ($\omega_{B\_ext}$) des Rads der ersten Achse (6), das in diesem Moment außerhalb der Fahrspur (2) liegt, mit dem Lenkradwinkel ($\alpha_v$) des Fahrzeugs und durch Dividieren des Ergebnisses durch eine lineare Funktion des Lenkradwinkels ($\alpha_v$) des Fahrzeugs berechnet wird.

2. Fahrspurverfolgungsverfahren nach Anspruch 1, wobei die theoretische Geschwindigkeitsabweichung ($\Delta\omega\_NONGLISS$) nur verwendet wird, wenn der Lenkradwinkel ($a_v$) im Absolutwert größer als ein Schwellwert ist.

3. Fahrspurverfolgungsverfahren nach einem der vorhergehenden Ansprüche, wobei mit der theoretischen Abweichung ($\Delta\omega\_NONGLISS$) nur die erste Geschwindigkeitsabweichung ($\Delta\omega_B\_MES$) verglichen wird, die zwischen den zwei Rädern (13, 14) der ersten Achse (6) gemessen wird.

4. Fahrspurverfolgungsverfahren nach einem der Ansprüche 1 bis 2, wobei außerdem mit der gleichen theoretischen Abweichung ($\Delta\omega\_NONGLISS$) eine zweite Abweichung ($\Delta\omega_F\_MES$) verglichen wird, die zwischen den Geschwindigkeiten von zwei Rädern (11, 12) einer zweiten Achse (7) des Fahrzeugs anders als die erste Achse (6) gemessen wird, und wenn der Absolutwert der Differenz zwischen der zweiten gemessenen Abweichung und der theoretischen Abweichung höher ist als ein Schwellwert ($\delta_2$max), ein Drehmoment-Verteilungssollwert (Br1, Br2) zwischen den zwei Rädern (11, 12) der zweiten Achse (7) verändert wird.

5. Fahrspurverfolgungsverfahren nach Anspruch 3, angewendet an ein Fahrzeug (1) mit Zweiradantrieb, und wobei die Hinterachse als erste Achse (6) definiert wird.

6. Fahrspurverfolgungsverfahren nach Anspruch 4, angewendet an ein Fahrzeug (1) mit Vierradantrieb, und wobei die Hinterachse als erste Achse (6) definiert wird.

7. Kraftfahrzeug, das mit einer Fahrspurverfolgungseinheit (10) ausgestattet ist, die mindestens zwei gemessene Geschwindigkeiten ($\omega_{B\_ext}$, $\omega_{B\_int}$) von zwei Antriebsrädern (13, 14) einer gleichen ersten Achse (6) des Fahrzeugs (1) empfängt, wobei die Verfolgungseinheit einen Komparator (16) enthält, der eine Abweichung zwischen den gemessenen Drehgeschwindigkeiten ($\omega_{B\_int}$, $\omega_{B\_ext}$) der Räder empfangen kann, und die Verfolgungseinheit einen Lenkradwinkelwert ($\alpha_v$) des Fahrzeugs empfängt, **dadurch gekennzeichnet, dass** die Verfolgungseinheit (10) konfiguriert ist, einen Drehmoment-Verteilungssollwert (Br3, Br4) zwischen den zwei Rädern zu verändern, wenn der Absolutwert der Differenz zwischen der Abweichung zwischen den gemessenen Drehgeschwindigkeiten ($\Delta\omega_B\_MES$) und einer theoretischen Abweichung ($\Delta\omega\_NONGLISS$) höher als ein Schwellwert ($\delta_1$max) ist, wobei die theoretische Abweichung berechnet wird, indem die Geschwindigkeit ($\omega_{B\_ext}$) des Rads der Hinterachse (6), das in diesem Moment außerhalb der Fahrspur (2) liegt, mit dem Lenkradwinkel ($\alpha_v$) des Fahrzeugs multipliziert wird, und indem das Ergebnis durch eine lineare Funktion des Lenkradwinkels ($\alpha_v$) des Fahrzeugs dividiert wird.

**Claims**

1. Method for monitoring the trajectory followed by a motor vehicle (1), in which method there is calculated, as a function of a steering wheel angle ($\alpha_v$) of the vehicle and as a function of the speed ($\omega_{B\_ext}$) of a driven wheel (13, 14), the said wheel forming part of a first axle (6) of the vehicle and being a wheel on the outside of the current bend in the trajectory (2) followed by the vehicle (1), a theoretical speed discrepancy ($\Delta\omega\_NOSLIP$) between the wheels (13, 14) of the first axle (6), in which there is determined a first measured speed discrepancy ($\Delta\omega_B\_MEAS$) measured by the difference between two measured speeds of two wheels (13, 14) of the first axle (6), and in which, if the absolute value of the difference between the first measured discrepancy ($\Delta\omega_B\_MEAS$) and the theoretical discrepancy

($\Delta\omega$_NOSLIP) is above a threshold ($\delta_1$max), a setpoint for the distribution of torque (Br3, Br4) between the two wheels of the first axle is modified, **characterized in that** the theoretical discrepancy ($\Delta\omega$_NOSLIP) is calculated by multiplying by the steering wheel angle ($\alpha_v$) of the vehicle the speed ($\omega_{B\_ext}$) of that wheel of the first axle (6) which is at that moment on the outside of the trajectory (2), and by dividing the result by a linear function of the steering wheel angle ($\alpha_v$) of the vehicle.

2. Method for monitoring a trajectory according to Claim 1, in which the theoretical speed discrepancy ($\Delta\omega$_NOSLIP) is used only if the steering wheel angle ($\alpha_V$) is, in terms of absolute value, above a threshold.

3. Method for monitoring a trajectory according to either one of the preceding claims, in which only the first measured speed discrepancy ($\Delta\omega_B$_MEAS) measured between the two wheels (13, 14) of the first axle (6) is compared against the theoretical discrepancy ($\Delta\omega$_NOSLIP).

4. Method for monitoring a trajectory according to either one of Claims 1 and 2, in which a second measured discrepancy ($\Delta\omega_F$_MEAS) measured between the speeds of two wheels (11, 12) of a second axle (7) of the vehicle different from the first axle (6) is also compared against the same theoretical discrepancy ($\Delta\omega$_NOSLIP) and, if the absolute value of the difference between the second measured discrepancy and the theoretical discrepancy is above a threshold ($\delta_2$max), a setpoint for the distribution of torque (Br1, Br2) between the two wheels (11, 12) of the second axle (7) is modified.

5. Method for monitoring a trajectory according to Claim 3, applied to a two-wheel drive vehicle (1), and in which the rear axle is defined as being the first axle (6).

6. Method for monitoring a trajectory according to Claim 4, applied to a four-wheel drive vehicle (1), and in which the rear axle is defined as being the first axle (6).

7. Motor vehicle equipped with a unit for monitoring a trajectory (10) receiving at least two measured speeds ($\omega_{B\_ext}$, $\omega_{B\_int}$) of two driven wheels (13, 14) of the one same first axle (6) of the vehicle (1), the said monitoring unit comprising a comparator (16) able to receive a discrepancy between the said measured rotational speeds ($\omega_{B\_int}$, $\omega_{B\_ext}$) of the said wheels, and the said monitoring unit receiving a steering wheel angle value ($\alpha_v$) of the vehicle, **characterized in that** the monitoring unit (10) is configured to modify a setpoint for the distribution of torque (Br3, Br4) between the two wheels when the absolute value of the difference between the said discrepancy between the said measured rotational speeds ($\Delta\omega_B$_MEAS) and a theoretical discrepancy ($\Delta\omega$_NOSLIP) is above a threshold ($\delta_1$max), the said theoretical discrepancy being calculated by multiplying by the steering wheel angle ($\alpha_V$) of the vehicle the speed ($\omega_{B\_ext}$) of that wheel of the rear axle (6) which is at that moment on the outside of the trajectory (2) and by dividing the result by a linear function of the steering wheel angle ($\alpha_v$) of the vehicle.

FIG.1

## FIG.2

$$\omega_{B\_ext}$$

$$\omega_{B\_int}$$

20

$$\Delta\omega_B\_MES$$

30

31

$$|\Delta\omega_B\_MES - \Delta\omega\_NONGLISS| > \delta_1 max$$

Oui → $PAT_B = 1$

Non → $PAT_B = 0$

$$\omega_{B\_ext}$$

$$\alpha_V$$

15

$$\Delta\omega\_NONGLISS$$

## FIG.3

$$\omega_{F\_ext}$$

$$\omega_{F\_int}$$

19

$$\Delta\omega_F\_MES$$

40

41

$$|\Delta\omega_F\_MES - \Delta\omega\_NONGLISS| > \delta_2 max$$

Oui → $PAT_F = 1$

Non → $PAT_F = 0$

$$\omega_{B\_ext}$$

$$\alpha_V$$

15

$$\Delta\omega\_NONGLISS$$

31

$$|\Delta\omega_B\_MES - \Delta\omega\_NONGLISS| > \delta_1 max$$

→ $PAT_B = 1$

→ $PAT_B = 0$

$$\omega_{B\_ext}$$

$$\omega_{B\_int}$$

20

$$\Delta\omega_B\_MES$$

# FIG.4

## RÉFÉRENCES CITÉES DANS LA DESCRIPTION

**Documents brevets cités dans la description**

- FR 2955943
- US 20090127014 A